# EUROPEAN PATENT SPECIFICATION

(11) **EP 2 238 373 B1**
(45) Date of publication and mention of the grant of the patent: **10.10.2018**
(21) Application number: 08866035.2
(22) Date of filing: 25.11.2008
(51) Int. Cl.: F16H 61/662

(54) **AUTOMATIC TRANSMISSION PROVIDED WITH A HYDRAULICALLY ASSISTED CLUTCH AND METHOD FOR OPERATING THE SAME**
AUTOMATIKGETRIEBE MIT EINER HYDRAULISCHEN KUPPLUNG UND BETÄTIGUNGSVERFAHREN DAFÜR
TRANSMISSION AUTOMATIQUE DOTÉE D'UN EMBRAYAGE À COMMANDE HYDRAULIQUE ET SON PROCÉDÉ DE FONCTIONNEMENT

(30) Priority: 28.12.2007 NL 1034876
(43) Date of publication of application: 13.10.2010
(73) Proprietor: Robert Bosch GmbH, 70442 Stuttgart (DE)
(72) Inventor: VAN WIJK, Wilhelmus Johannes Maria, 5071 AN Udenhout (NL); VAN DER SLUIS, Francis Maria Antonius, 5271 HP Sint-Michielsgestel (NL)
(74) Representative: Plevier, Gabriel Anton Johan Maria
(86) International application number: PCT/NL2008/050745
(87) International publication number: WO 2009/084952

(56) References cited:
- EP-A- 0 764 799
- DE-A1- 4 331 266
- DE-A1- 10 148 424
- US-A- 4 712 453
- US-A- 4 718 308
- US-A- 5 314 385
- US-A1- 2005 235 637

## Description

The present invention relates to a hydraulically assisted clutch, in particular a moving-off clutch, of an automatic transmission, such as a continuously variable transmission which is used in the drive line of motor vehicles for, in particular, passenger transport. An automatic transmission of this type is generally known, for example from European patent EP-A-0,109,001 and from Dutch patent application NL-1032577, which is not a prior publication.

Further, US 5314385 A shows the preamble of claim 1.

The known automatic transmission comprises an input shaft and an output shaft, which can be drive-connected to one another selectively and/or disconnected using the clutch of the transmission. The known clutch is in this case provided with at least one pair of rotatable clutch elements, which can be pressed against one another on account of a hydraulic pressure which is applied in a pressure chamber of the clutch, so that a torque can be transmitted between them by means of friction forces. A maximum transmittable torque is in this case determined by and can be adjusted by means of the level of said hydraulic pressure, or clutch pressure. As a rule, the clutch is furthermore provided with a spring, which moves the clutch elements away from one another again when the clutch pressure drops, that is to say completely disconnects the drive between the input shaft and the output shaft of the transmission again.

During closure of the clutch, the clutch elements rotate at a different speed to one another, that is to say the clutch elements slip with respect to one another. As a result of this clutch slip and the friction forces applied in order to transmit the torque between the clutch elements, heat develops in the clutch. In the case of a full throttle acceleration of a mid-range passenger car with automatic transmission, the amount of heat which develops may be considerable. Under certain circumstances, this may result in problems, such as overheating or an undesirable degradation of the clutch elements or the hydraulic pressure medium, but at least the area of application of the clutch is limited to a specific maximum engine power as a result.

A known solution to this problem and/or this limitation is to actively cool the clutch. To this end, the hydraulic medium is not only used to generate said clutch pressure, but also as a coolant by making it flow along or at least close to the clutch elements. To this end, the clutch is connected to a system of oil passages or the like for circulating the hydraulic medium between a pump and the clutch elements. The circulation system may in this case comprise a heat exchanger for cooling the hydraulic medium by means of (ambient) air.

It is an object of the present invention to improve the known circulation system, in particular to increase the efficiency thereof. To this end, the invention provides the automatic transmission according to claim 1. According to a not claimed method the flow of hydraulic medium between the pump and the clutch elements is interrupted after the clutch has been closed, in other words after the clutch pressure has reached a level at which there is no, or at least no significant, clutch slip.

The method has the advantage that the closed clutch is not cooled unnecessarily, which results in a higher efficiency of the circulation system and thus of the transmission as a whole.

It is furthermore possible to interrupt the flow of hydraulic medium between the pump and the clutch elements if the clutch is open, that is to say if the so-called closing force exerted by the clutch pressure on the clutch elements is smaller than the spring force exerted thereon by said spring, for example when the clutch pressure is equal to the ambient pressure. With such a method, the clutch is also not cooled unnecessarily when it is completely open, that is to say when no or at least an insignificant amount of frictional heat develops. In another variant of the method, the flow of hydraulic medium between the pump and the clutch elements, that is the volume thereof which is supplied per unit time, is set as a function of the product between the clutch pressure and the clutch slip. Preferably, this medium flow is proportional, in particular directly proportional to that product.

The invention, which is defined by claim 1, will now be explained in more detail by way of example with reference to the drawing, in which:
Fig. 1 diagrammatically shows a hydraulic control system of the known continuously variable transmission with drive belt and pulleys and a clutch;
Fig. 2 shows a first example of a not claimed transmission in a manner similar to the representation in Fig. 1;
Fig. 3 shows a second example of a not claimed transmission;
Fig. 4 shows a third example of a not claimed transmission; and
Fig. 5 shows a fourth example of the transmission and which is according to the invention.

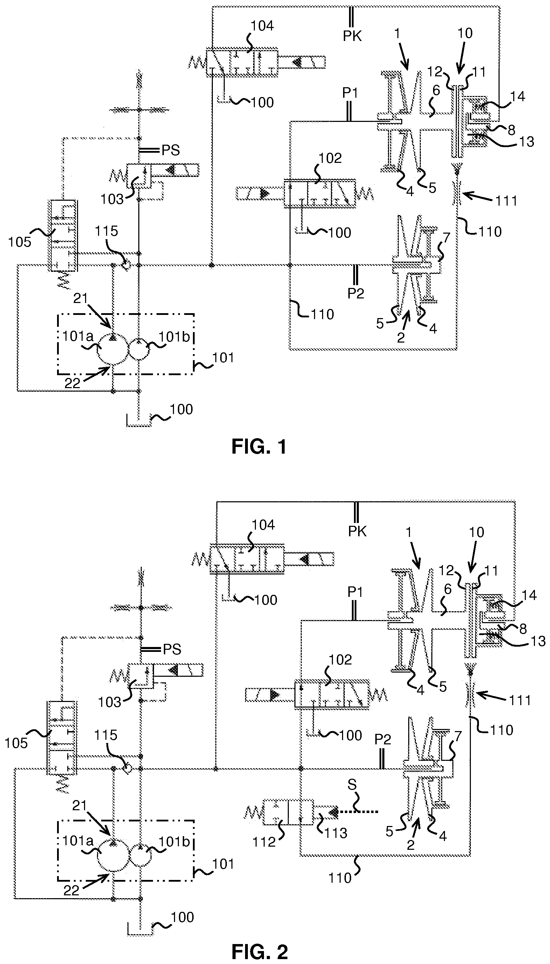

Fig. 1 highly diagrammatically shows the central parts of the known continuously variable transmission, as are being used in the drive mechanism of, for example, passenger cars. The transmission is generally known per se and comprises a primary pulley 1 and a secondary pulley 2, each comprising two pulley discs 4 and 5, and a drive belt which is accommodated in between (but not shown). The pulley discs 4 and 5 are conical in shape and at least one disc 4 of a pulley 1, 2 is axially displaceable over a respective pulley axle 6, 7 on which the discs 4 and 5 are fitted. In operation of the transmission, the drive belt is clamped between the discs 4 and 5 of the two pulleys 1 and 2 on account of the hydraulic pressure P1, P2 exerted on the respective displaceable discs 4. The level of the pulley pressures P1 and P2 in this case determines, on the one hand, a transmission ratio of the transmission and, on the other hand, the maximum torque which can be transmitted between a respective pulley 1, 2 and the drive belt.

The transmission comprises a clutch 10 which is intended and suitable for selectively connecting and/or disconnecting the input shaft 8 of the transmission with a pulley axle 6. To this end, the clutch 10 is provided with a first clutch element 11 which is non-rotatably connected to the input shaft 8 and with a second clutch element 12 which is non-rotatably connected to the pulley axle 6. At least one clutch element, in this case the first clutch element 11, is axially displaceable, so that it can optionally be brought into frictional contact with the second clutch element 12 by means of actuation means 13 and 14 of the clutch 10. In the illustrated embodiment, actuation means 13 and 14 comprise a pressure chamber 13 in which a hydraulic clutch pressure PK can be exerted, which acts on the first clutch element 11 and which exerts a force thereon which acts in the direction of the second clutch element 12, that is the force with which the clutch 10 can be closed, and a spring 14 for opening and/or keeping open the clutch 10 if a clutch pressure PK which is (too) low is applied or none at all.

In order to be able to adjust said pulley pressures P1, P2 and clutch pressure PK to the desired level, the transmission is provided with a hydraulic control system. The hydraulic control system in this case comprises a medium reservoir 100, a pump 101 for forcing a flow of hydraulic medium from the medium reservoir 100 to other parts of the control system, at least two control valves 102 and 103 for separately adjusting said pulley pressures P1 and P2 and a control valve 104 for adjusting said clutch pressure PK.

In this connection, it is known from Dutch patent application NL-1032577, which is not a prior publication, to provide the pump 101 in duplicate, that is to say as two parallel pump units 101a and 101b, a first pump unit 101a of which can be disconnected, at least if the flow of hydraulic medium delivered by a second pump unit 101b, which is mechanically driven by means of the input shaft 8, is sufficient to provide the respective functions of the control system. In this case, said disconnection in the illustrated example is effected by short-circuiting the first pump unit 101a, that is to say by connecting the outlet or delivery side 21 thereof directly to the inlet or suction side 22, and/or the medium reservoir 100, to which end a pump flow control valve 105 and a non-return valve 115 are provided.

Preferably, but not necessarily, the respective control valves 102, 103 and 104 are actuated, at least indirectly, in an electronic manner with the aid of an electronic control unit. The pump flow control valve 105 can also be actuated electronically, although according to NL-1032577 it is advantageously possible to actuate this valve 105 hydraulically by the action of a pressure level PS which is present downstream of the two pulley pressure control valves 102, 103, as is illustrated in Fig. 1 and described in detail in NL-1032577.

The hydraulic control system of the transmission furthermore comprises a duct, i.e. passage 110, for supplying the hydraulic medium to the clutch for the cooling thereof. Depending on the pressure at which the cooling duct 110 is fed, it is possible to provide the latter with a so-called hydraulic restriction 111 in order to limit the flow of the medium, i.e. the coolant stream. The cooling duct 110 is in this case designed in such a manner that it causes the coolant stream to flow along or at least near to said clutch elements 11, 12.

A drawback of the arrangement of the control system shown in Fig. 1 is that an amount of energy is lost via the coolant stream, which is approximately equal to the pressure drop in the coolant stream multiplied by the magnitude thereof, while the coolant stream according to the present invention is partly superfluous. According to the present invention, the efficiency of the known transmission can be improved by interrupting said coolant stream after the clutch 10 is closed, that is to say after the clutch pressure PK has reached a level at which no clutch slip occurs. This method has the advantage that the closed clutch 10 is not cooled unnecessarily, which results in a higher efficiency of the hydraulic control system and thus of the transmission as a whole.

Fig. 2 illustrates a first embodiment of the transmission by means of which the abovementioned method can be implemented. The hydraulic control system shown in Fig. 2 corresponds largely to the known control system, except for the addition of a switch valve 112 in the cooling duct 110 by means of which the latter - and thus said coolant stream - can be interrupted. In the illustrated embodiment, the switch valve 112 is actuated electronically on account of generally known valve control means 113 and as a function of a suitably selected input signal S. However, it is likewise equally possible to provide the switch valve 112 with hydraulic and/or mechanical valve control means. The valve control means 113 in this case actuate the switch valve 112 based on or at least in relation to whether or not the clutch 10 is closed. At least if the clutch 10 is completely closed, that is to say at least if the respective rotation speeds of said clutch elements 11, 12 of the clutch 10 are all equal and greater than zero, the control means 113 close the switch valve 112 and thus interrupt the coolant stream.

It is likewise possible to design the valve control means 113 in such a manner that the switch valve 112 is also closed, and/or said coolant stream is interrupted, when the clutch 10 is completely open, that is to say if the force exerted by the clutch pressure PK on the clutch elements 11, 12 is smaller than the force exerted thereon by the spring 14. More in particular, it is possible and advantageous to design the switch valve 112 as the known proportional control valve and in this case the valve control means 113 in such a manner that they open and/or close the switch valve 112 gradually in proportion to the frictional heat developed in the clutch 10, as can, for example, be deduced from the product between the clutch pressure PK and the clutch slip, i.e. the difference in speed of rotation of said clutch elements 11, 12.

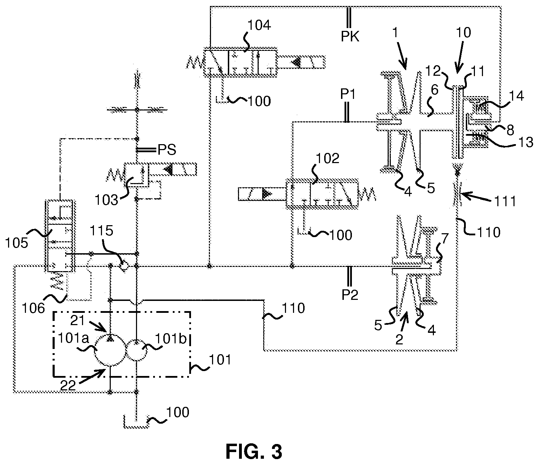

Fig. 3 shows a second embodiment of the transmission by means of which the method can be implemented. In the application of the present invention, the elements which are already present in the known control system are used in a particularly advantageous manner. More particularly, the pump flow control valve 105 is also used for interrupting said coolant stream by connecting the cooling duct 110 directly to the delivery side 21 of the first pump unit 101a, that is to say without a (control) valve, restriction or the like being positioned in between, since this first pump unit 101a is disconnected and/or interrupted at a relatively high speed of the vehicle in which the transmission is used, that is to say after an initial acceleration thereof during which the clutch 10 was closed. Thus, in this second embodiment, the coolant stream to the clutch 10 is also disconnected, after said initial acceleration during which the clutch 10 was closed.

Compared to the first embodiment of the transmission this second embodiment has the advantage that, for the intended interruption of the coolant stream, no additional valve and associated control means, such as the switch valve 112 and the valve control means 113 from Fig. 2, are required. However, it may be a drawback that under certain, very specific operating conditions, it is possible in the above-described second embodiment for the first pump unit 101a and thus said coolant stream to be already disconnected while the clutch 10 is not yet completely closed. This could result in the clutch 10 still overheating. Such specific operating conditions are in particular the last phase of a quick acceleration of the vehicle in which the transmission is used and in which the required pressure of the hydraulic medium is indeed relatively high, but in which, as a result of the high speed of the input shaft 8 there is, in principle, sufficient hydraulic medium available to be able to disconnect the first pump unit 101a.

This possible shortcoming can be eliminated in a simple manner by means of a so-called pressure-feedback means 106 on the pump flow control valve 105 for the highest pressure which prevails in the control system, in this example relating to the secondary pulley pressure P2 of the secondary pulley 2. This pressure-feedback means 106, which is illustrated in Fig. 3 by means of dashed line 106, is designed in such a manner that the first pump unit 101a and thus said coolant stream is not disconnected and/or interrupted at a relatively high value of said pulley pressure P2, at least only at a higher value of said pressure level PS downstream of the two pulley pressure control valves 102, 103, that is only at a higher speed of the input shaft 8.

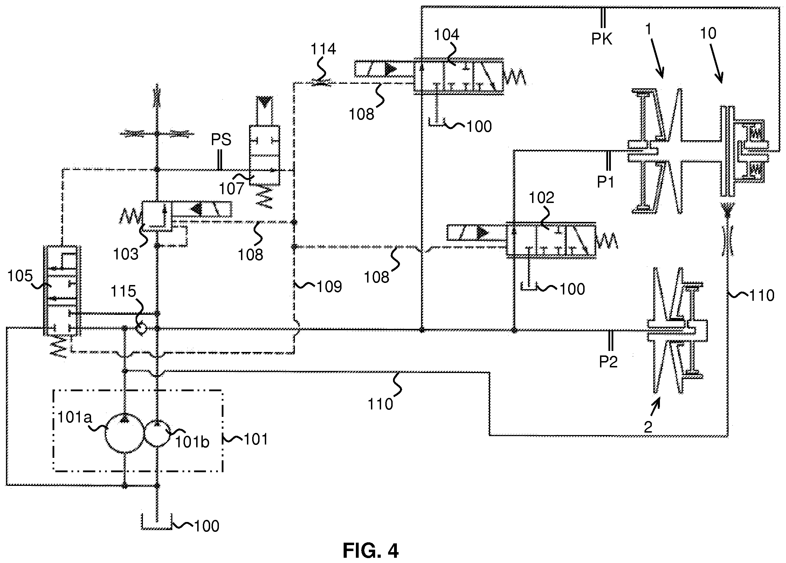

Fig. 4 shows a third embodiment of the transmission, which is an alternative for the above-described pressure-feedback means 106. Incidentally, the arrangement of the control system from Fig. 4 is largely identical to that from Fig. 3. However, in Fig. 4, the control system is also provided with a so-called fail-safe function, which takes over the actuation of the respective control valves 102, 103 and 104 in the event of a failure of said electronic control unit. Advantageously, the fail-safe function is of a simple design and comprises at least one switch valve 107 with electrical excitation which brings about hydraulic actuation of the control valves 102, 103 and 104 when said excitation is lost by feeding back said pressure level PS downstream of the two pulley pressure control valves 102, 103 to the separate control valves 102, 103 and 104 via respective control lines 108. In this case, another control feature 114 is provided in the control line 108 of the clutch pressure control valve 104, in this example a simple hydraulic restriction 114, in order to enable the clutch 10 to be closed and opened again gradually.

The fail-safe function also comprises a control line 109 by means of which said pressure level PS is fed back to the pump flow control valve 105 downstream of the two pulley pressure control valves 102, 103. In any case, the said failure of the electronic control unit will result in the first pump unit 101a and said coolant stream only being disconnected at a relatively high speed of the input shaft 8.

In addition, this arrangement of the control system offers the possibility of switching off the excitation of the switch valve 107, even when the electronic control unit functions correctly. As a result thereof, said pressure-feedback means on the pump flow control valve 105 is thus actively switched on via the control line 109 and therefore said coolant stream is only disconnected at a relatively high speed of the input shaft 8. As has already been discussed above, the latter may be desirable or even necessary under certain operating conditions.

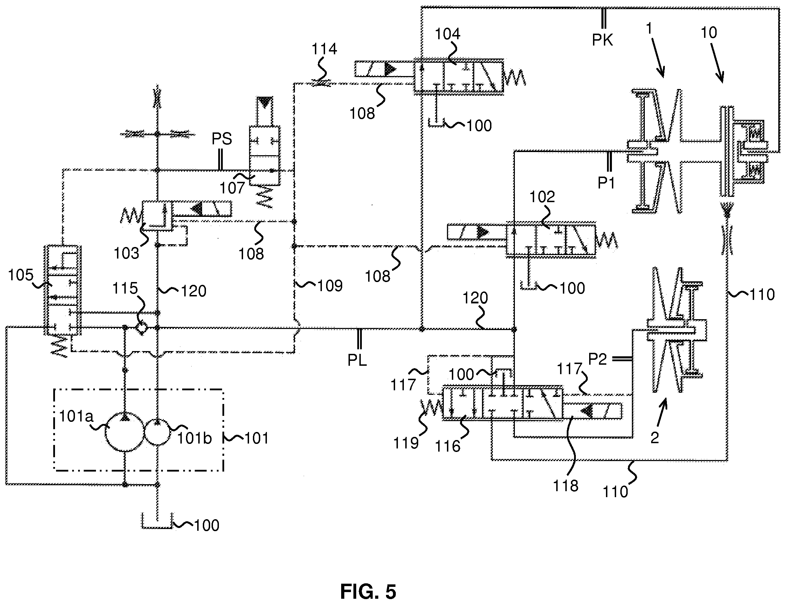

Fig. 5 shows a fourth and last embodiment of the transmission, which forms the invention and is an advantageous alternative for the above-described arrangement of the hydraulic control system. Incidentally, the arrangement of the control system from Fig. 5 is largely identical to that from Fig. 4, except that in this case the control of the coolant stream by the cooling duct 110 and said fail-safe function are implemented independently from one another. In this embodiment, three control valves are provided for controlling the two pulley pressures P1 and P2:
- a first control valve 103 for adjusting the highest system pressure, the so-called line pressure PL in a line pressure passage 120, to the desired value,
- a second control valve 102 for adjusting the primary pulley pressure P1 to a desired value, and
- a third control valve 116 for adjusting the secondary pulley pressure P2 to a desired value.

The two pulley pressure control valves 102, 116 are in this case accommodated hydraulically in series with the line pressure valve 103. The third control valve 116 is in this case also provided with a switch function for selectively switching the coolant stream to the clutch 10 on or off, in such a manner that when this third control valve 116 is completely open, which is at least the case during said initial acceleration, this also brings about a hydraulic connection between the line pressure passage 120 and the cooling duct 110. In this position of the third control valve 116, the secondary pulley pressure P2 is thus equal to the line pressure PL and the latter is adjusted to the level of the desired secondary pulley pressure P2. As soon as the desired primary pulley pressure P1 and thus also the required line pressure PL becomes higher than the desired secondary pulley pressure P2, the third control valve 116 assumes a pressure-reducing position, that is a control position, in which the cooling duct 110 is simultaneously disconnected from the line pressure passage 120 and said coolant stream is interrupted.

Incidentally, the exact operation of the third control valve 116 illustrated in Fig. 5 is slightly more sophisticated than described above, in particular the possibility has been created thereby to interrupt said coolant stream sooner, that is to say even before the primary pressure P1 becomes higher than the secondary pressure P2. To this end, the third control valve 116 is provided with valve control means, which comprise a spring 119, a control pressure passage 118 and pressure-feedback ducts 117 for both the secondary pressure P2 and the line pressure P1. The spring 119 and the line pressure P1 force the third valve 116 in the direction of said completely open position, while a control pressure in the control pressure passage 118 and the secondary pressure P2 act thereon in the reverse direction and try to close the third valve 116 and/or the connection between the line pressure passage 120 and the secondary pulley 2.

In operation of the transmission, the third valve 116 designed in this manner has three positions and/or functions. In a first position, in which no control pressure is generated, or at any rate in which the force exerted by this control pressure on the valve is smaller than the force exerted thereon by the spring 119, the valve 116 is completely open and thus provides a direct hydraulic connection between the line pressure passage 120 and the cooling duct 110. In this first position, the secondary pulley pressure P2 is, in addition, equal to the line pressure PL and is thus adjusted by actuation of the line pressure valve 103, as has already been described above. In a second position, a specific control pressure is generated, in such a manner that the force exerted thereby is equal to the spring force and the valve 116 assumes a control position, in which the cooling duct 110 is closed. In this second position, the secondary pulley pressure P2 is smaller than the line pressure PL by a fixed value, with a predetermined pressure drop between them being determined by the ratio between the forces exerted by the secondary pressure P2 and the line pressure P1 on the third valve 116 by means of the pressure-feedback ducts 117. In this second position, the desired secondary pulley pressure P2 is still adjusted by actuation of the line pressure valve 103, but taking into account said pressure drop in between. In a third position of the third valve 116, which third position is activated when the primary pressure P1 becomes greater than the secondary pressure P2 plus said predetermined pressure drop, a relatively large control pressure is adjusted, in such a manner that the third valve 116 effects a pressure drop which is required in order to achieve the currently desired secondary pressure P2 and/or derive it from the higher line pressure level PL which is determined in this case by the primary pressure P1.

It will be clear that this last specific embodiment of the hydraulic control system has the advantage that the coolant stream in the cooling duct 110 intended for the clutch 10 can be switched on and off as desired by optionally exerting said specific control pressure, advantageously without requiring an additional switch valve (such as for example switch valve 112 from Fig. 2). This applies at least as long as the secondary pressure P2 is greater than the primary pressure P1, which is the case at least during said initial acceleration.

## Claims

1. Automatic transmission, such as a continuously variable transmission for motor vehicles, provided with a hydraulically assisted clutch (10) having an input shaft (8) and an output shaft (6), which can be drive-connected to one another and/or disconnected, and with a hydraulic control system which comprises at least a medium reservoir (100), a pump (101) a hydraulic passage (110) for supplying a flow of hydraulic medium to the clutch (10) in order to cool the latter and means for interrupting the coolant stream to the clutch (10), **characterized in that** the transmission, at least the control system thereof, comprises a line pressure valve (103) and a pulley pressure control valve (116), respectively for controlling a line pressure (PL) and a pulley pressure (P2) derived therefrom, and **in that** the pulley pressure control valve (116) is also provided with a switch function for switching said coolant stream on or off.

2. Automatic transmission according to Claim 1, **characterized in that** the pulley pressure control valve (116) is designed in such a manner that said coolant stream is switched on when said pulley pressure (P2) is equal to said line pressure (PL), that is to say if the pulley pressure control valve (116) is completely open, and is switched off when said pulley pressure (P2) is smaller than said line pressure (PL), that is to say in a pressure-reducing position of the pulley pressure control valve (116).

3. Automatic transmission according to Claim 2, **characterized in that** the pulley pressure control valve (116) is provided with valve control means in the shape of at least a spring (119), a control pressure passage (118) and two pressure-feedback ducts (117) by means of which respectively said pulley pressure (P2) and said line pressure (P1) act on this valve (116), with the spring (119) and the line pressure (P1) driving the valve (116) in the direction of said completely open position thereof, with a control pressure in the control pressure passage (118) and the secondary pressure (P2) driving the valve (116) in a direction opposite thereto.

## Patentansprüche

1. Automatikgetriebe, wie z. B. ein stufenloses Getriebe für Kraftfahrzeuge, das mit einer Hydraulikkupplung (10), die eine Eingangswelle (8) und eine Ausgangswelle (6), die miteinander antriebsgekoppelt und/oder -entkoppelt sein können, aufweist, und mit einem hydraulischen Steuersystem, das mindestens einen Mediumbehälter (100), eine Pumpe (101), einen Hydraulikdurchgang (110) zum Zuführen eines Hydraulikmediumstroms zu der Kupplung (10) zum Kühlen letzterer und Mittel zum Unterbrechen des Kühlmittelstroms zu der Kupplung (10) umfasst, versehen ist, **dadurch gekennzeichnet, dass** das Getriebe, zumindest das Steuersystem davon, ein Leitungsdruckventil (103) und ein Rollendrucksteuerventil (116) zum Steuern eines Leitungsdrucks (PL) bzw. eines davon abgeleiteten Rollendrucks (P2) umfasst und dass das Rollendrucksteuerventil (116) des Weiteren mit einer Schaltfunktion zum Ein- und Abschalten des Kühlmittelstroms versehen ist.

2. Automatikgetriebe nach Anspruch 1, **dadurch gekennzeichnet, dass** das Rollendrucksteuerventil (116) derart konstruiert ist, dass der Kühlmittelstrom eingeschaltet wird, wenn der Rollendruck (P2) dem Leitungsdruck (PL) entspricht, d. h. wenn das Rollendrucksteuerventil (116) vollständig geöffnet ist, und abgeschaltet wird, wenn der Rollendruck (P2) weniger als der Leitungsdruck (PL) beträgt, d. h. in einer Druckablassstellung des Rollendrucksteuerventils (116) .

3. Automatikgetriebe nach Anspruch 2, **dadurch gekennzeichnet, dass** das Rollendrucksteuerventil (116) mit Ventilsteuermitteln in Form mindestens einer Feder (119), einem Steuerdruckdurchgang (118) und zwei Druckrückkopplungskanälen (117), durch die der Rollendruck (P2) bzw. der Leitungsdruck (P1) auf dieses Ventil (116) wirken, versehen ist, wobei die Feder (119) und der Leitungsdruck (P1) das Ventil (116) in Richtung seiner vollständig geöffneten Stellung treiben und ein Steuerdruck in dem Steuerdruckdurchgang (118) und der sekundäre Druck (P2) das Ventil (116) in eine dazu entgegengesetzt verlaufende Richtung treiben.

## Revendications

1. Transmission automatique, par exemple transmission à variation continue pour véhicules automobiles, pourvu d'un embrayage à commande hydraulique (10) ayant un arbre d'entrée (8) et un arbre de sortie (6) qui peuvent être connectés par entraînement l'un à l'autre et/ou déconnectés l'un de l'autre, et avec un système de commande hydraulique qui comprend au moins un réservoir de fluide (100), une pompe (101), un passage hydraulique (110) pour fournir un écoulement de fluide hydraulique à l'embrayage (10) afin de refroidir ce dernier et un moyen pour interrompre le flux de réfrigérant à l'embrayage (10), **caractérisée en ce que** la transmission, au moins le système de commande de celle-ci, comprend une soupape de pression de ligne (103) et une soupape de régulation de la pression de poulie (116), respectivement, pour réguler une pression de ligne (PL) et une pression de poulie (P2) dérivée de celle-ci, et **en ce que** la soupape de régulation de pression de poulie (116) est également pourvue d'une fonction de commutateur pour commuter ledit flux de réfrigérant à l'ouverture et à la fermeture.

2. Transmission automatique selon la revendication 1, **caractérisée en ce que** la soupape de régulation de pression de poulie (116) est conçue de telle sorte que ledit flux de réfrigérant soit ouvert lorsque ladite pression de poulie (P2) est égale à ladite pression de ligne (PL), c'est-à-dire lorsque la soupape de régulation de pression de poulie (116) est complètement ouverte, et qu'il soit fermé lorsque ladite pression de poulie (P2) est inférieure à ladite pression de ligne (PL), c'est-à-dire dans une position de réduction de pression de la soupape de régulation de pression de poulie (116) .

3. Transmission automatique selon la revendication 2, **caractérisée en ce que** la soupape de régulation de pression de poulie (116) est pourvue d'un moyen de régulation de soupape sous la forme d'au moins un ressort (119), d'un passage de pression de régulation (118) et de deux conduits de réaction de pression (117) au moyen desquels, respectivement, ladite pression de poulie (P2) et ladite pression de ligne (P1) agissent sur cette soupape (116), le ressort (119) et la pression de ligne (P1) entraînant la soupape (116) dans la direction de ladite position complètement ouverte de celle-ci, avec une pression de régulation dans le passage de pression de régulation (118) et la pression secondaire (P2) entraînant la soupape (116) dans une direction opposée à celle-ci.
